# EUROPÄISCHE PATENTSCHRIFT

(11) **EP 2 794 341 B1**
(45) Veröffentlichungstag und Bekanntmachung des Hinweises auf die Patenterteilung: **16.03.2016**
(21) Anmeldenummer: 12809598.1
(22) Anmeldetag: 12.12.2012
(51) Int. Cl.: B60L 11/18

(54) **FAHRZEUG MIT EINEM DURCH EINE BATTERIE GESPEISTEN ANTRIEBSAGGREGAT**
VEHICLE HAVING A BATTERY-POWERED DRIVE ASSEMBLY
VÉHICULE POURVU D'UN SYSTÈME D'ENTRAÎNEMENT ALIMENTÉ PAR UNE BATTERIE

(30) Priorität: 24.12.2011 DE 102011122216
(43) Veröffentlichungstag der Anmeldung: 29.10.2014
(73) Patentinhaber: AUDI AG, 85045 Ingolstadt (DE)
(72) Erfinder: KRÄUTER, Thomas, 85080 Gaimersheim (DE)
(74) Vertreter: Brandt, Kai
(86) Internationale Anmeldenummer: PCT/EP2012/005115
(87) Internationale Veröffentlichungsnummer: WO 2013/091793

(56) Entgegenhaltungen:
- DE-U1-202011 050 412
- US-A1- 2009 082 916
- US-A1- 2011 022 256

## Beschreibung

Die Erfindung bezieht sich auf ein Fahrzeug mit einem durch eine Batterie gespeisten Antriebsaggregat, mit einer mit der Batterie in Verbindung stehenden Ladedose zur Aufnahme eines mit einer Stromquelle verbundenen Ladesteckers, sowie mit einer Klappe zum Verschließen der Ladedose, wobei die Klappe über das Zentralverriegelungssystem des Fahrzeuges ver- und entriegelbar ist.

Gattungsgemäße Fahrzeuge werden verstärkt entwickelt und gewinnen zunehmend an Bedeutung. Zum Nachladen der Batterie sind diese Fahrzeuge üblicherweise mit einer Ladedose ausgestattet, die hinter einer schwenkbaren Klappe angeordnet ist. Zum Aufladen der Batterie wird die Klappe geöffnet und ein mit einer Stromquelle verbundener Ladestecker in die Ladedose eingeführt.

Da der Ladevorgang länger dauert, ist es erforderlich, das Fahrzeug zu verschließen, wozu in den meisten Fahrzeugen eine Zentralverriegelungsanlage vorgesehen ist. In vielen Fällen wird auch die Verbindung zwischen dem Ladestecker und der Ladedose gesichert, so dass der Ladestecker nicht von unbefugten Personen abgezogen werden kann.

Nach Beendigung des Ladevorgangs muss der Ladestecker gezogen und die Klappe geschlossen werden (siehe US 2011/022256 A1). Da das Fahrzeug jedoch verschlossen ist, kann die Klappe nicht ohne vorherige Betätigung der Zentralverriegelung in ihre Schließstellung bewegt werden. Grund dafür ist, dass das Verriegelungselement für die Klappe sich bei verschlossenem Fahrzeug in ihrer Sperrposition befindet. Deshalb muss vor dem Schließen der Klappe zunächst über die Zentralverriegelung das Fahrzeug entriegelt werden und nach dem Schließen der Klappe durch eine erneute Ansteuerung der Zentralverriegelung (durch Schlüssel, Fernbedienung oder bspw. eine Griffbetätigung bei Keyless-Entry-Systemen) das Fahrzeug wieder verschlossen werden.

Der vorliegenden Erfindung liegt deshalb die Aufgabe zugrunde, den Aufwand, der nur für das Schließen der Klappe erforderlich ist, zu reduzieren und damit die Bedienungsfreundlichkeit eines Elektrofahrzeuges zu verbessern.

Die Aufgabe wird dadurch gelöst, dass bei über die Zentralverriegelung verriegeltem Fahrzeug beim Entfernen des Ladesteckers aus der Ladedose die Zentralverriegelung für einen vorgegebenen Zeitraum zumindest die Klappe entriegelt, derart, dass die Klappe bis zum selbsttätigen Verriegeln nach Ablauf des vorgegebenen Zeitraums in ihre verriegelbare Schließstellung bewegbar ist. Dadurch kann der Fahrzeugbenutzer - ohne über die Abläufe zur Verriegelung der Klappe nachdenken zu müssen - den Ladestecker abziehen und die Klappe schließen. Nach dem Schließen der Klappe wird das Fahrzeug wieder selbsttätig verriegelt.

Zur Umsetzung der Erfindung ist es nur erforderlich, dass die Entfernung des Ladesteckers, bspw. durch einen entsprechenden Kontakt, erkannt wird und darüber die Zentralverriegelung so angesteuert wird, dass sie für einen vorgegebenen kurzen Zeitraum auf "Entriegeln" schaltet. Wenn die Zentralverriegelung so aufgebaut ist, dass die Klappe unabhängig von den Türen, der Heckklappe und anderen Einrichtungen betätigt wird, dann ist es natürlich ausreichend, wenn nur die Klappe für einen vorgegebenen kurzen Zeitraum entriegelt wird. In gleicher Weise ist es möglich, dass die komplette Zentralverriegelung beim Entfernen des Ladesteckers für einen kurzen Zeitraum alle Türen und Klappen entriegelt. Dies ist nicht nachteilig, da das Fahrzeug ja unter Beaufsichtigung ist.

Teilweise ist es so, dass bereits eine Sensierung des Ladesteckers gegeben ist. Wird der Ladestecker gezogen (Meldung liegt bereits auf Fahrzeug-CAN) kann in einfacher Weise über das Steuergerät der Zentralverriegelung die Verriegelung der Klappe temporär geöffnet werden. Somit lässt sich die Erfindung besonders kostengünstig realisieren.

## Patentansprüche

1. Fahrzeug mit einem durch eine Batterie gespeisten Antriebsaggregat, mit einer mit der Batterie in Verbindung stehenden Ladedose zur Aufnahme eines mit einer Stromquelle verbundenen Ladesteckers, wobei das Fahrzeug dazu ausgelegt ist, ein Entfernen des Ladesteckers aus der Ladedose zu erkennen,
**dadurch gekennzeichnet, dass**
das Fahrzeug eine Klappe zum Verschließen der Ladedose aufweist, wobei die Klappe über das Zentralverriegelungssystem des Fahrzeuges ver- und entriegelbar ist, wobei das Fahrzeug dazu eingerichtet ist, bei über die Zentralverriegelung verriegeltem Fahrzeug und für den Fall, dass das Entfernen des Ladesteckers aus der Ladedose erkannt wird, die Zentralverriegelung derart anzusteuern, dass die Zentralverriegelung für einen vorgegebenen Zeitraum zumindest die Klappe entriegelt, derart, dass die Klappe bis zum selbsttätigen Verriegeln nach Ablauf des vorgegebenen Zeitraums in ihre verriegelbare Schließstellung bewegbar ist.

2. Verfahren zum Verschließen einer Ladedose eines Kraftfahrzeugs mit einem durch eine Batterie gespeisten Antriebsaggregat, wobei die mit der Batterie in Verbindung stehende Ladedose zur Aufnahme eines mit einer Stromquelle verbundenen Ladesteckers ausgelegt ist, wobei durch das Fahrzeug ein Entfernen des Ladesteckers aus der Ladedose erkennbar ist,
**dadurch gekennzeichnet, dass**
eine Klappe des Fahrzeugs zum Verschließen der Ladedose über eine Zentralverriegelung der Kraftfahrzeugs ver- und entriegelbar ist, wobei bei über die Zentralverriegelung verriegeltem Fahrzeug und für den Fall, dass das Entfernen des Ladesteckers aus der Ladedose erkannt wird, die Zentralverriegelung derart angesteuert wird, dass die Zentralverriegelung für einen vorgegebenen Zeitraum zumindest die Klappe entriegelt, derart, dass die Klappe bis zum selbsttätigen Verriegeln nach Ablauf des vorgegebenen Zeitraums in ihre verriegelbare Schließstellung bewegbar ist.

## Claims

1. Vehicle with a battery-supplied drive unit with a charging socket, connected to the battery, for receiving a charging plug, connected to an electricity source, wherein the vehicle is designed to detect removal of the charging plug from the charging socket
**characterised in that**
the vehicle has a hinged cover for closing the charging socket, wherein the hinged cover can be locked and unlocked via the vehicle's central locking system, wherein the vehicle is equipped so that in the case of a vehicle locked via the central locking system, if removal of the charging plug from the charging socket is detected it controls the central locking system in such a way that the central locking system unlocks at least the hinged cover for a predetermined period of time so that the hinged cover can be moved into its lockable closing position by the time of automatic locking on expiry of the predetermined period of time.

2. Method of locking a charging socket of a vehicle with a drive unit supplied by a battery, wherein the charging socket, connected to the battery, is designed to receive the charging plug, connected to an electricity source, wherein removal of the charging plug from the charging socket is detected by the vehicle,
**characterised in that**
a hinged cover of the vehicle for closing the charging socket can be locked and unlocked via the vehicle's central locking system, wherein in the case of a vehicle locked via the central locking system, if removal of the charging plug from the charging socket is detected it controls the central locking system in such a way that the central locking system unlocks at least the hinged cover for a predetermined period of time so that the hinged cover can be moved into its lockable closing position by the time of automatic locking on expiry of the predetermined period of time.

## Revendications

1. Véhicule comportant un système d'entraînement alimenté par une batterie, avec une prise de rechargement qui est en liaison avec la batterie et qui est destinée à recevoir un connecteur de rechargement relié à une source de courant, le véhicule étant conçu pour détecter le fait que le connecteur de rechargement est retiré de la prise de rechargement,
**caractérisé en ce que** le véhicule comporte un volet pour fermer la prise de rechargement, le volet pouvant être verrouillé et déverrouillé par l'intermédiaire du système de verrouillage central du véhicule, le véhicule étant conçu pour, lorsque le véhicule est verrouillé par l'intermédiaire du verrouillage central et lorsque le retrait du connecteur de rechargement hors de la prise de rechargement est détecté, commander le verrouillage central de telle sorte que le verrouillage central déverrouille au moins le volet pendant un intervalle de temps prédéterminé de telle sorte que le volet peut être déplacé dans sa position de fermeture verrouillable jusqu'au verrouillage automatique après la fin de l'intervalle de temps prédéterminé.

2. Procédé de fermeture d'une prise de rechargement d'un véhicule automobile comportant un système d'entraînement alimenté par une batterie, la prise de rechargement qui est en liaison avec la batterie étant destinée à recevoir un connecteur de rechargement relié à une source de courant, un retrait du connecteur de rechargement hors de la prise de rechargement pouvant être détecté par le véhicule,
**caractérisé en ce qu'**un volet du véhicule pour la fermeture de la prise de rechargement peut être verrouillé et déverrouillé par l'intermédiaire d'un verrouillage central du véhicule automobile et **en ce que**, lorsque le véhicule est verrouillé par l'intermédiaire du verrouillage central et lorsque le retrait du connecteur de rechargement hors de la prise de rechargement est détecté, le verrouillage central est commandé de telle sorte que le verrouillage central déverrouille au moins le volet pendant un intervalle de temps prédéterminé de telle sorte que le volet peut être déplacé dans sa position de fermeture verrouillable jusqu'au verrouillage automatique après la fin de l'intervalle de temps prédéterminé.
